# FASCICULE DE BREVET EUROPEEN

(11) **EP 4 455 016 B1**
(45) Date de publication et mention de la délivrance du brevet: **19.11.2025**
(21) Numéro de dépôt: 24171609.1
(22) Date de dépôt: 22.04.2024
(51) Int. Cl.: B64D 29/06, F02K 1/78, F01D 25/16, F01D 25/28, F02C 7/20

(54) **STRUCTURE INTÉRIEURE FIXE POUR UNE NACELLE D'AÉRONEF**
FESTE INNENSTRUKTUR FÜR EINE FLUGZEUGGONDEL
FIXED INTERIOR STRUCTURE FOR AN AIRCRAFT NACELLE

(30) Priorité: 24.04.2023 FR 2304078
(43) Date de publication de la demande: 30.10.2024
(73) Titulaire: AIRBUS OPERATIONS, 31060 Toulouse Cedex 9 (FR)
(72) Inventeur: CAZEAUX, Laurent, 31060 TOULOUSE (FR); CALIMAN, Laurent, 31060 TOULOUSE (FR); CHARTON, Nicolas, 31060 TOULOUSE (FR)
(74) Mandataire: Cabinet Le Guen Maillet

(56) Documents cités:
- WO-A1-2019/155015
- US-A- 5 101 621
- US-A1- 2015 041 059
- US-A1- 2015 136 875
- US-A1- 2015 143 796

## Description

### DOMAINE TECHNIQUE

La présente invention concerne une structure intérieure fixe pour une nacelle d'aéronef, une nacelle comportant deux telles structures, ainsi qu'un aéronef comportant au moins une telle nacelle.

### ÉTAT DE LA TECHNIQUE ANTÉRIEURE

Une nacelle d'un moteur d' aéronef est fixée à une structure de l'aile de l'aéronef par un mât réacteur et la nacelle renferme le moteur de l'aéronef. La nacelle comporte classiquement deux structures intérieures fixes (également appelées IFS pour « Internal Fix Structure » en terminologie Anglo-Saxonne) et deux structures extérieures (également appelées OS pour « Outer Structure » en terminologie Anglo-Saxonne).

Chaque structure comporte une partie formant globalement un demi-cylindre. Les deux structures intérieures sont disposées l'une en face de l'autre pour former un cylindre dans lequel est logé le moteur et les deux structures extérieures sont disposées autour des structures intérieures fixes. Une veine secondaire est ainsi formée entre les structures intérieures fixes et les structures extérieures.

Une structure intérieure fixe est généralement constituée d'un panneau d'extrémité supérieure, d'un panneau intermédiaire et d'un panneau d'extrémité inférieure. Les panneaux d'extrémité sont globalement plans et le panneau intermédiaire est globalement en demi-cylindrique et entre les panneaux d'extrémité. Les panneaux d'extrémité sont fixés au panneau intermédiaire de manière à former la structure intérieure fixe.

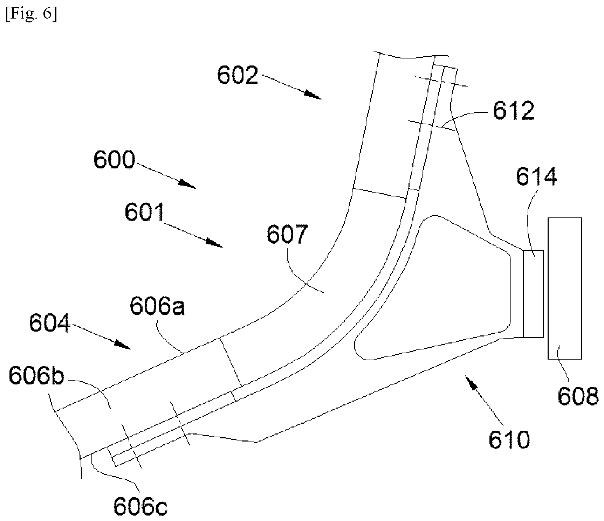

La Fig. 6 montre un exemple d'une structure intérieure fixe 600 de l'état de la technique au niveau d'une jonction supérieure 601 entre le panneau d'extrémité supérieure 602 et le panneau intermédiaire 604. Chaque panneau 602, 604 prend la forme d'un panneau sandwich comportant successivement une peau résistive 606a, une structure en nid d'abeilles 606b et une peau structurale 606c.

La structure intérieure fixe 600 comporte également à la jonction 601, au moins un sabot 610, classiquement en métal, qui est fixé *a posteriori* sur les panneaux 602 et 604, par exemple à l'aide de fixations 612. Chaque sabot 610 porte également un patin 614.

Au niveau de la jonction supérieure 601, les deux structures intérieures fixes 600 se présentent de part et d'autre du mât réacteur 608 et chaque patin 614 vient en appui contre une surface du mât réacteur 608.

Au niveau d'une jonction inférieure entre le panneau d'extrémité inférieure et le panneau intermédiaire 604, les deux structures intérieures fixes 600 se présentent l'une en face de l'autre et chaque patin 614 d'une structure intérieure fixe 600 vient en appui contre un patin de l'autre structure intérieure fixe 600.

En outre, du fait de la courbure au niveau des jonctions 601, la structure intérieure fixe 600 comporte une structure en nid d'abeilles 607 qui présente des propriétés de flexibilité élevées pour s'adapter à ladite courbure.

Même si un tel arrangement est satisfaisant du point de vue fonctionnel, il est nécessaire de trouver un nouvel arrangement, par exemple pour éliminer la structure en nid d'abeilles 607 flexible qui est relativement coûteuse.

Le document WO-A-2019/155015 divulgue une structure intérieure fixe de l'état de la technique, ladite structure intérieure fixe comportant un panneau d'extrémité supérieure, un panneau d'extrémité inférieure, un panneau intermédiaire en forme de demi-cylindre et disposé entre le panneau d'extrémité supérieure et le panneau d'extrémité inférieure, une éclisse supérieure entre le panneau d'extrémité supérieure et le panneau intermédiaire, une éclisse inférieure entre le panneau intermédiaire et le panneau d'extrémité inférieure, où chaque éclisse présente une surface de fixation, et pour chaque surface de fixation, un patin fixé à ladite surface de fixation, où chaque patin de l'éclisse supérieure est destiné à venir en appui contre une surface du mât réacteur, et où chaque patin de l'éclisse inférieure est destiné à venir en appui contre un patin d'une éclisse inférieure d'une autre structure intérieure fixe.

### EXPOSÉ DE L'INVENTION

Un objet de la présente invention est de proposer une structure intérieure fixe pour une nacelle d'aéronef, pour laquelle les sabots sont intégrés directement dans une éclisse fixée aux panneaux.

À cet effet, est proposée une structure intérieure fixe pour une nacelle d'un aéronef comportant un mât réacteur, ladite structure intérieure fixe comportant :
- un panneau d'extrémité supérieure,
- un panneau d'extrémité inférieure,
- un panneau intermédiaire en forme de demi-cylindre et disposé entre le panneau d'extrémité supérieure et le panneau d'extrémité inférieure,
- une éclisse supérieure entre le panneau d'extrémité supérieure et le panneau intermédiaire,
- une éclisse inférieure entre le panneau intermédiaire et le panneau d'extrémité inférieure, où chaque éclisse est constituée d'une peau avec une face intérieure et une face extérieure, où la face intérieure est fixée au panneau intermédiaire et au panneau d'extrémité considéré, et où la peau comporte au moins un enfoncement en saillie par rapport à la face extérieure, où chaque enfoncement présente une surface de fixation, et
- pour chaque surface de fixation, un patin fixé à ladite surface de fixation, où chaque patin de l'éclisse supérieure est destiné à venir en appui contre une surface du mât réacteur, et où chaque patin de l'éclisse inférieure est destiné à venir en appui contre un patin d'une éclisse inférieure d'une autre structure intérieure fixe.

Avec un tel arrangement, il n'est plus nécessaire de mettre en place une structure en nid d'abeilles avec des propriétés de flexibilité élevées et une structure en nid d'abeilles avec des propriétés de flexibilité standards est suffisante.

Selon un mode de réalisation particulier, chaque panneau est un panneau sandwich comportant successivement une peau résistive, une structure en nid d'abeilles et une peau structurale, fixées entre elles, où la face intérieure de chaque éclisse est fixée aux peaux structurales du panneau intermédiaire et du panneau d'extrémité considéré.

Selon un mode de réalisation particulier, chaque panneau est un panneau sandwich comportant successivement une peau résistive, une structure en nid d'abeilles, une peau structurale, fixées entre elles, et une peau de fermeture conformée pour être fixée à la peau structurale et à la tranche dudit panneau, où la face intérieure de chaque éclisse est fixée aux peaux de fermeture du panneau intermédiaire et du panneau d'extrémité considéré. Avantageusement, la structure intérieure fixe comporte une peau complémentaire fixée entre les peaux résistives du panneau intermédiaire et du panneau d'extrémité considéré, et les peaux de fermeture du panneau intermédiaire et du panneau d'extrémité considéré sont communes et forment alors une même peau accolée contre la peau complémentaire. Avantageusement, la structure intérieure fixe comporte une structure complémentaire en nid d'abeilles fixée entre la peau complémentaire et la/les peau(x) de fermeture.

Avantageusement, la tranche du panneau intermédiaire et la tranche d'un panneau d'extrémité considéré sont à distance l'une de l'autre, l'éclisse considérée comporte des raidisseurs ou boudinages ou gaufrage disposés contre la face intérieure de la peau de ladite éclisse, et chaque raidisseur ou boudinage ou gaufrage est positionné entre la tranche du panneau intermédiaire et la tranche dudit panneau d'extrémité.

Avantageusement, chaque raidisseur ou boudinage ou gaufrage comporte une plaque fixée à la peau de l'éclisse.

Avantageusement, chaque raidisseur ou boudinage ou gaufrage comporte une paroi solidaire de la plaque et s'étendant perpendiculairement à la plaque.

L'invention propose également une nacelle pour un aéronef comportant un mât réacteur, la nacelle comportant deux structures intérieures fixes selon l'une des variantes précédentes, où les deux structures intérieures fixes sont l'une en face de l'autre, de manière à ce que les panneaux intermédiaires forment un cylindre, où chaque patin de l'éclisse inférieure d'une structure intérieure fixe est en appui contre un patin de l'éclisse inférieure de l'autre structure intérieure fixe.

L'invention propose également un aéronef comportant un mât réacteur et au moins une nacelle selon la variante précédente où chaque patin de l'éclisse supérieure d'une structure intérieure fixe est en appui contre une surface du mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique en perspective d'une structure intérieure fixe selon l'invention,
Fig. 3 est une vue en perspective et de face d'une éclisse pour la structure intérieure fixe selon l'invention,
Fig. 4 est une vue en perspective et de dos de l'éclisse de la Fig. 3,
Fig. 5 est une vue en coupe de la structure intérieure fixe selon l'invention au niveau du plan V de la Fig. 2, et
Fig. 6 est une vue en coupe d'une structure intérieure fixe de l'état de la technique.

### EXPOSÉ DÉTAILLÉ DE MODES DE RÉALISATION

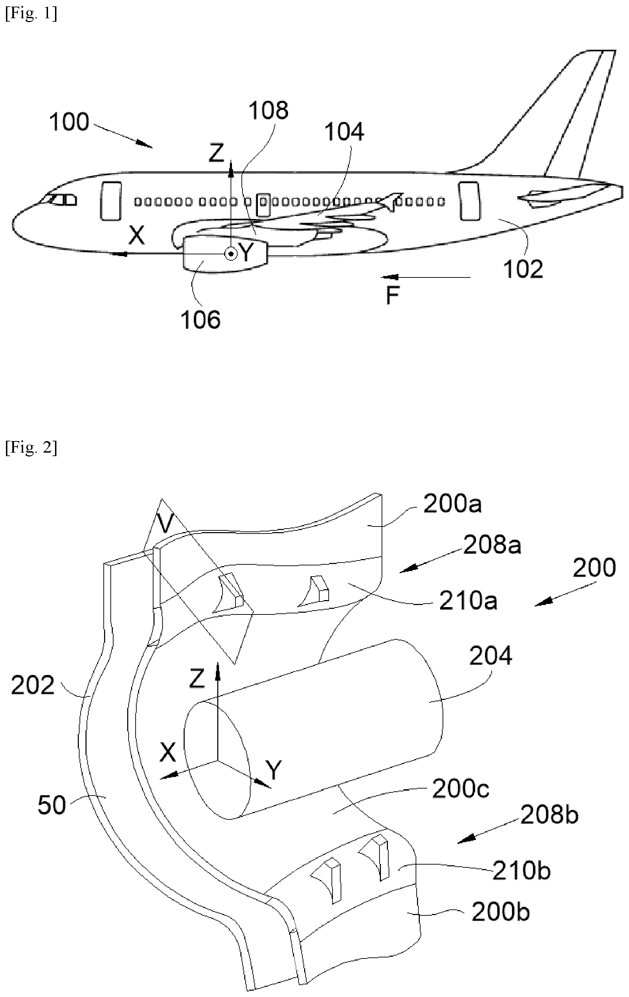

La Fig. 1 montre un aéronef 100 qui comporte un fuselage 102 de part et d'autre duquel est fixée une aile 104 sous laquelle est fixée au moins une nacelle 106 par l'intermédiaire d'un mât réacteur 108. À l'intérieur de la nacelle 106 est logé un moteur.

Dans la description qui suit, et par convention, on appelle X l'axe longitudinal de la nacelle 106, orienté positivement dans le sens d'avancement de l'aéronef 100, on appelle Y l'axe transversal qui est horizontal lorsque l'aéronef 100 est au sol, et Z l'axe vertical ou hauteur verticale lorsque l'aéronef 100 est au sol, ces trois directions X, Y et Z étant orthogonales entre elles.

Dans la description qui suit, les termes relatifs à une position sont pris en référence au sens de déplacement de l'aéronef 100 lorsque la turbomachine fonctionne et représenté par la flèche F.

La Fig. 2 montre une structure intérieure fixe 200 selon l'invention. Comme pour l'état de la technique, la nacelle 106 comporte deux structures intérieures fixes 200 (également appelées IFS pour « Internal Fix Structure » en terminologie anglo-saxonne) et deux structures extérieures 202 (également appelées OS pour « Outer Structure » en terminologie anglo-saxonne).

Chaque structure 200, 202 comporte une partie formant globalement un demi-cylindre et les deux structures intérieures fixes 200 sont disposées l'une en face de l'autre de manière à ce que les deux demi-cylindres s'associent pour former un cylindre dans lequel est logé le moteur 204. Les deux structures extérieures 202 sont disposées autour des structures intérieures fixes 200 de manière à former une veine d'air secondaire 50 entre les structures intérieures fixes 200 et les structures extérieures 202.

La structure intérieure fixe 200 est constituée d'un panneau d'extrémité supérieure 200a, d'un panneau intermédiaire 200c et d'un panneau d'extrémité inférieure 200b. Les panneaux d'extrémité 200a-b sont globalement plans et le panneau intermédiaire 200c forme globalement un demi-cylindre, et il est disposé et fixé entre les panneaux d'extrémité 200a-b pour former la structure intérieure fixe 200. En position dans l'aéronef 100, le panneau d'extrémité supérieure 200a est disposé au-dessus du panneau intermédiaire 200c et le panneau d'extrémité inférieure 200b est disposé en-dessous du panneau intermédiaire 200c. Ainsi, dans la nacelle 106, les deux structures intérieures fixes 200 sont l'une en face de l'autre, de manière à ce que les panneaux intermédiaires 200c soient en face l'un de l'autre pour former le cylindre dans lequel est logé le moteur 204.

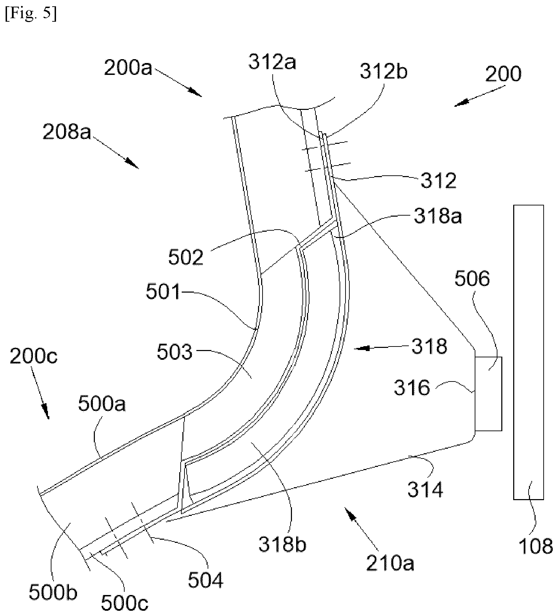

La structure intérieure fixe 200 présente une jonction supérieure 208a entre le panneau d'extrémité supérieure 200a et le panneau intermédiaire 200c et une jonction inférieure 208b entre le panneau intermédiaire 200c et le panneau d'extrémité inférieure 200b. La Fig. 5 montre la structure intérieure fixe 200 au niveau de la jonction supérieure 208a, mais l'arrangement est similaire au niveau de la jonction inférieure 208b.

Selon l'invention, au niveau de la jonction supérieure 208a, la structure intérieure fixe 200 comporte une éclisse supérieure 210a et au niveau de la jonction inférieure 208b, la structure intérieure fixe 200 comporte une éclisse inférieure 210b. Chaque éclisse 210a-b assure la jonction et la fixation entre le panneau intermédiaire 200c et le panneau d'extrémité 200a-b considéré.

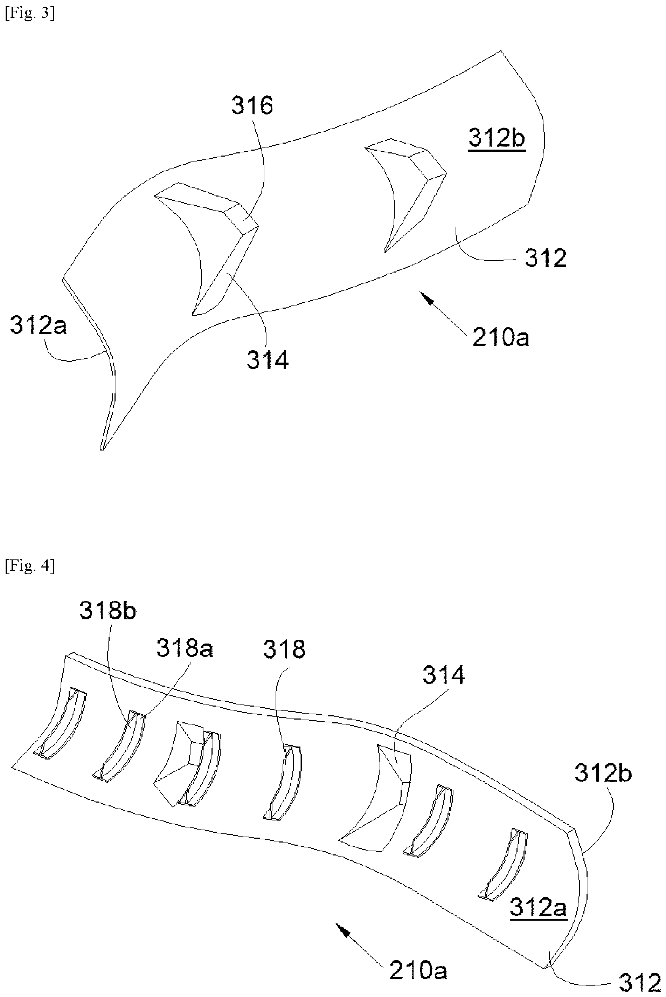

Les Figs. 3 et 4 montrent l'éclisse supérieure 210a, mais le principe est identique pour l'éclisse inférieure 210b. L'éclisse 210a-b est constituée d'une peau 312 présentant une face intérieure 312a et une face extérieure 312b où la face intérieure 312a est fixée au panneau intermédiaire 200c et au panneau d'extrémité 200a-b considéré.

La tranche du panneau intermédiaire 200c et la tranche du panneau d'extrémité 200a-b considéré sont à distance l'une de l'autre, et l'éclisse 210a-b vient ainsi combler l'espace entre lesdites tranches et les maintenir entre elles.

La peau 312 est ainsi conformée en fonction de la forme de la structure intérieure fixe 200 et elle comporte un ou plusieurs enfoncements 314, où chaque enfoncement 314 est en saillie par rapport à la face extérieure 312b. Chaque enfoncement 314 est donc monobloc avec la peau 312, formant ainsi un unique composant. Chaque enfoncement 314 forme ainsi un bossage du côté de la face extérieure 312b et un évidement du côté de la face intérieure 312a. La fixation de la peau 312 est assurée par tous moyens appropriés comme la pose de fixations 504 tels que des boulons aveugles, le collage, etc.

Chaque enfoncement 314 présente une surface de fixation 316 sur laquelle est fixé un patin 506.

Au niveau de la jonction supérieure 208a et donc de l'éclisse supérieure 210a, les deux structures intérieures fixes 200 se présentent de part et d'autre du mât réacteur 108 et chaque patin 506 d'une éclisse supérieure 210a vient en appui contre une surface du mât réacteur 108. Au niveau de la jonction inférieure 208b, et donc de l'éclisse inférieure 210b, les deux structures intérieures fixes 200 se présentent l'une en face de l'autre, et chaque patin 506 de l'éclisse inférieure 210b d'une structure intérieure fixe 200 vient en appui contre un patin 506 de l'éclisse inférieure 210b de l'autre structure intérieure fixe 200.

Ainsi, avec un tel arrangement, il n'est plus nécessaire de mettre en place une structure en nid d'abeilles flexible, d'où un gain financier. L'intégration des enfoncements dans l'éclisse permet d'obtenir un seul composant qui peut être facilement mis en place, au lieu d'en avoir plusieurs dans le cas de l'état de la technique.

Chaque éclisse 210a-b peut être réalisée en tous matériaux appropriés comme en métal (alliages d'aluminium, acier), en composite thermodurcissable ou thermoplastique, et par tous procédés appropriés comme par estampage, emboutissage, moulage, usinage ou autres.

Dans le mode de réalisation de l'invention présenté à la Fig. 5, chaque panneau 200a-c prend la forme d'un panneau sandwich comportant successivement une peau résistive 500a, une structure en nid d'abeilles 500b et une peau structurale 500c qui sont fixées les unes aux autres.

La peau structurale 500c et la structure en nid d'abeilles 500b assurent la rigidité du panneau 200a-c et assurent la reprise des efforts qui transitent dans le panneau 200a-c.

La peau résistive 500a est percée de trous qui débouchent dans la structure en nid d'abeilles 500b pour assurer une absorption des ondes acoustiques. La peau résistive 500a est disposée vers la veine d'air secondaire 50 et la peau structurale 500c est orientée vers le moteur 204. La structure en nid d'abeilles 500b est constituée de cellules ouvertes qui s'étendent entre la peau résistive 500a et la peau structurale 500c.

Dans un mode de réalisation de l'invention non représenté, la face intérieure 312a de chaque éclisse 210a-b est fixée aux peaux structurales 500c du panneau intermédiaire 200c et du panneau d'extrémité 200a-b considéré.

Dans le mode de réalisation de l'invention présenté à la Fig. 5, chaque panneau 200a-c comporte également une peau de fermeture 502 qui est conformée pour être fixée à la peau structurale 500c dudit panneau 200a-c et à la tranche dudit panneau 200a-c pour fermer la structure en nid d'abeilles 500b. Dans ce mode de réalisation de l'invention, la face intérieure 312a de chaque éclisse 210a-b est fixée aux peaux de fermeture 502 du panneau intermédiaire 200c et du panneau d'extrémité 200a-b considéré.

En outre, dans le mode de réalisation de l'invention présenté à la Fig. 5, une peau complémentaire 501 est fixée entre les peaux résistives 500a du panneau intermédiaire 200c et du panneau d'extrémité 200a-b, formant la jonction 208a-b considérée. Les peaux de fermeture 502 du panneau intermédiaire 200c et du panneau d'extrémité 200a-b considéré sont communes et forment alors une même peau qui est accolée contre la peau complémentaire 501.

Dans le mode de réalisation de l'invention présenté à la Fig. 5, une structure complémentaire en nid d'abeilles 503 est fixée entre la peau complémentaire 501 et la/les peau(x) de fermeture 502.

Pour régler la rigidité de la peau 312 de l'éclisse 210a-b, des raidisseurs 318 ou boudinages ou gaufrages (« corrugation » en terminologie anglosaxonne) sont disposés contre la face intérieure 312a. Dans le cas des raidisseurs 318, ces derniers sont fixés à la face intérieure 312a. Chaque raidisseur 318 ou boudinage ou gaufrage est positionné dans l'espace entre la tranche du panneau intermédiaire 200c et la tranche du panneau d'extrémité 200a-b considéré. Dans le mode de réalisation de l'invention présenté à la Fig. 5, chaque raidisseur 318 est ainsi disposé entre la peau 312 de l'éclisse 210a-b et la peau de fermeture 502 entre le panneau intermédiaire 200c et le panneau d'extrémité 200a-b.

Selon le procédé mis en œuvre pour réaliser l'éclisse 210a-b, chaque raidisseur 318 est ajouté par surmoulage, liaison mécanique, soudage, etc.

Chaque raidisseur 318 ou boudinage ou gaufrage comporte ici une plaque 318a fixée à la peau 312 de l'éclisse 210a-b et qui est ici cintrée.

En fonction des contraintes, chaque raidisseur 318 ou boudinage ou gaufrage peut comporter également une paroi 318b solidaire de la plaque 318a et s'étendant perpendiculairement à la plaque 318a.

## Revendications

1. Structure intérieure fixe (200) pour une nacelle (106) d'un aéronef (100) comportant un mât réacteur (108), ladite structure intérieure fixe (200) comportant :
- un panneau d'extrémité supérieure (200a),
- un panneau d'extrémité inférieure (200b),
- un panneau intermédiaire (200c) en forme de demi-cylindre et disposé entre le panneau d'extrémité supérieure (200a) et le panneau d'extrémité inférieure (200b),
- une éclisse supérieure (210a) entre le panneau d'extrémité supérieure (200a) et le panneau intermédiaire (200c),
- une éclisse inférieure (210b) entre le panneau intermédiaire (200c) et le panneau d'extrémité inférieure (200b), où chaque éclisse (210a-b) est constituée d'une peau (312) avec une face intérieure (312a) et une face extérieure (312b), où la face intérieure (312a) est fixée au panneau intermédiaire (200c) et au panneau d'extrémité (200a-b) considéré, et où la peau (312) comporte au moins un enfoncement (314) en saillie par rapport à la face extérieure (312b), où chaque enfoncement (314) présente une surface de fixation (316), et
- pour chaque surface de fixation (316), un patin (506) fixé à ladite surface de fixation (316), où chaque patin (506) de l'éclisse supérieure (210a) est destiné à venir en appui contre une surface du mât réacteur (108), et où chaque patin (506) de l'éclisse inférieure (210b) est destiné à venir en appui contre un patin (506) d'une éclisse inférieure (210b) d'une autre structure intérieure fixe (200).

2. Structure intérieure fixe (200) selon la revendication 1, **caractérisée en ce que** chaque panneau (200a-c) est un panneau sandwich comportant successivement une peau résistive (500a), une structure en nid d'abeilles (500b) et une peau structurale (500c), fixées entre elles, où la face intérieure (312a) de chaque éclisse (210a-b) est fixée aux peaux structurales (500c) du panneau intermédiaire (200c) et du panneau d'extrémité (200a-b) considéré.

3. Structure intérieure fixe (200) selon la revendication 1, **caractérisée en ce que** chaque panneau (200a-c) est un panneau sandwich comportant successivement une peau résistive (500a), une structure en nid d'abeilles (500b), une peau structurale (500c), fixées entre elles, et une peau de fermeture (502) conformée pour être fixée à la peau structurale (500c) et à la tranche dudit panneau (200a-c), où la face intérieure (312a) de chaque éclisse (210a-b) est fixée aux peaux de fermeture (502) du panneau intermédiaire (200c) et du panneau d'extrémité (200a-b) considéré.

4. Structure intérieure fixe (200) selon la revendication 3, **caractérisée en ce qu'**elle comporte une peau complémentaire (501) fixée entre les peaux résistives (500a) du panneau intermédiaire (200c) et du panneau d'extrémité (200a-b) considéré, et **en ce que** les peaux de fermeture (502) du panneau intermédiaire (200c) et du panneau d'extrémité (200a-b) considéré sont communes et forment alors une même peau accolée contre la peau complémentaire (501).

5. Structure intérieure fixe (200) selon la revendication 4, **caractérisée en ce qu'**elle comporte une structure complémentaire en nid d'abeilles (503) fixée entre la peau complémentaire (501) et la/les peau(x) de fermeture (502).

6. Structure intérieure fixe (200) selon l'une des revendications 1 à 5, **caractérisée en ce que** la tranche du panneau intermédiaire (200c) et la tranche d'un panneau d'extrémité (200a-b) considéré sont à distance l'une de l'autre, **en ce que** l'éclisse (210a-b) considérée comporte des raidisseurs (318) ou boudinages ou gaufrages disposés contre la face intérieure (312a) de la peau (312) de ladite éclisse (210a-b), et **en ce que** chaque raidisseur (318) ou boudinage ou gaufrage est positionné entre la tranche du panneau intermédiaire (200c) et la tranche dudit panneau d'extrémité (200a-b).

7. Structure intérieure fixe (200) selon la revendication 6, **caractérisé en ce que** chaque raidisseur (318) ou boudinage ou gaufrage comporte une plaque (318a) fixée à la peau (312) de l'éclisse (210a-b).

8. Structure intérieure fixe (200) selon la revendication 7, **caractérisée en ce que** chaque raidisseur (318) ou boudinage ou gaufrage comporte une paroi (318b) solidaire de la plaque (318a) et s'étendant perpendiculairement à la plaque (318a).

9. Nacelle (106) pour un aéronef (100) comportant un mât réacteur (108), la nacelle (106) comportant deux structures intérieures fixes (200) selon l'une des revendications 1 à 8, où les deux structures intérieures fixes (200) sont l'une en face de l'autre, de manière à ce que les panneaux intermédiaires (200c) forment un cylindre, où chaque patin (506) de l'éclisse inférieure (210b) d'une structure intérieure fixe (200) est en appui contre un patin (506) de l'éclisse inférieure (210b) de l'autre structure intérieure fixe (200).

10. Aéronef (100) comportant un mât réacteur (108) et au moins une nacelle (106) selon la revendication précédente, où chaque patin (506) de l'éclisse supérieure (210a) d'une structure intérieure fixe (200) est en appui contre une surface du mât réacteur (108).

## Patentansprüche

1. Feste Innenstruktur (200) für eine Gondel (106) eines Luftfahrzeugs (100), das einen Triebwerkspylon (108) umfasst, wobei die feste Innenstruktur (200) umfasst:
- eine obere Endplatte (200a),
- eine untere Endplatte (200b),
- eine Zwischenplatte (200c) in Halbzylinderform, die zwischen der oberen Endplatte (200a) und der unteren Endplatte (200b) angeordnet ist,
eine obere Lasche (210a) zwischen der oberen Endplatte (200a) und der Zwischenplatte (200c),
- eine untere Lasche (210b) zwischen der Zwischenplatte (200c) und der unteren Endplatte (200b), wobei jede Lasche (210a-b) aus einer Haut (312) mit einer Innenseite (312a) und einer Außenseite (312b) besteht, wobei die Innenseite (312a) an der Zwischenplatte (200c) und an der betreffenden Endplatte (200a-b) befestigt ist und wobei die Haut (312) mindestens eine Vertiefung (314) umfasst, die in Bezug auf die Außenseite (312b) vorsteht, wobei jede Vertiefung (314) eine Befestigungsfläche (316) aufweist, und
- für jede Befestigungsfläche (316) einen an der Befestigungsfläche (316) befestigten Schuh (506), wobei jeder Schuh (506) der oberen Lasche (210a) dazu bestimmt ist, an einer Fläche des Triebwerkspylons (108) zur Anlage zu kommen, und wobei jeder Schuh (506) der unteren Lasche (210b) dazu bestimmt ist, an einem Schuh (506) einer unteren Lasche (210b) einer anderen festen Innenstruktur (200) zur Anlage zu kommen.

2. Feste Innenstruktur (200) nach Anspruch 1, **dadurch gekennzeichnet, dass** jede Platte (200a-c) eine Sandwichplatte ist, die nacheinander eine widerstandsfähige Haut (500a), eine Wabenstruktur (500b) und eine Strukturhaut (500c) umfasst, die aneinander befestigt sind, wobei die Innenseite (312a) jeder Lasche (210a-b) an den Strukturhäuten (500c) der Zwischenplatte (200c) und der betreffenden Endplatte (200a-b) befestigt ist.

3. Feste Innenstruktur (200) nach Anspruch 1, **dadurch gekennzeichnet, dass** jede Platte (200a-c) eine Sandwichplatte ist, die nacheinander eine widerstandsfähige Haut (500a), eine Wabenstruktur (500b), eine Strukturhaut (500c), die aneinander befestigt sind, und eine Verschlusshaut (502), die dafür ausgebildet ist, an der Strukturhaut (500c) und an dem Rand der Platte (200a-c) befestigt zu werden, umfasst, wobei die Innenseite (312a) jeder Lasche (210a-b) an den Verschlusshäuten (502) der Zwischenplatte (200c) und der betreffenden Endplatte (200a-b) befestigt ist.

4. Feste Innenstruktur (200) nach Anspruch 3, **dadurch gekennzeichnet, dass** sie eine komplementäre Haut (501) umfasst, die zwischen den widerstandsfähigen Häuten (500a) der Zwischenplatte (200c) und der betreffenden Endplatte (200a-b) befestigt ist, und dadurch, dass die Verschlusshäute (502) der Zwischenplatte (200c) und der betreffenden Endplatte (200a-b) diesen gemeinsam sind und somit ein und dieselbe Haut bilden, die an die komplementäre Haut (501) angefügt ist.

5. Feste Innenstruktur (200) nach Anspruch 4, **dadurch gekennzeichnet, dass** sie eine komplementäre Wabenstruktur (503) umfasst, die zwischen der komplementären Haut (501) und der Verschlusshaut/den Verschlusshäuten (502) befestigt ist.

6. Feste Innenstruktur (200) nach einem der Ansprüche 1 bis 5, **dadurch gekennzeichnet, dass** der Rand der Zwischenplatte (200c) und der Rand einer betreffenden Endplatte (200a-b) voneinander beabstandet sind, dadurch, dass die betreffende Lasche (210a-b) Versteifungen (318) oder Verdickungen oder Prägungen umfasst, die an der Innenseite (312a) der Haut (312) der Lasche (210a-b) anliegend angeordnet sind, und dadurch, dass jede Versteifung (318) oder Verdickung oder Prägung zwischen dem Rand der Zwischenplatte (200c) und dem Rand der Endplatte (200a-b) positioniert ist.

7. Feste Innenstruktur (200) nach Anspruch 6, **dadurch gekennzeichnet, dass** jede Versteifung (318) oder Verdickung oder Prägung eine Platte (318a) umfasst, die an der Haut (312) der Lasche (210a-b) befestigt ist.

8. Feste Innenstruktur (200) nach Anspruch 7, **dadurch gekennzeichnet, dass** jede Versteifung (318) oder Verdickung oder Prägung eine Wand (318b) umfasst, die mit der Platte (318a) fest verbunden ist und sich senkrecht zu der Platte (318a) erstreckt.

9. Gondel (106) für ein Luftfahrzeug (100), das einen Triebwerkspylon (108) umfasst, wobei die Gondel (106) zwei feste Innenstrukturen (200) nach einem der Ansprüche 1 bis 8 umfasst, wobei die zwei festen Innenstrukturen (200) einander gegenüberliegen, derart, dass die Zwischenplatten (200c) einen Zylinder bilden, wobei jeder Schuh (506) der unteren Lasche (210b) einer festen Innenstruktur (200) an einem Schuh (506) der unteren Lasche (210b) einer anderen festen Innenstruktur (200) anliegt.

10. Luftfahrzeug (100), welches einen Triebwerkspylon (108) und mindestens eine Gondel (106) nach dem vorhergehenden Anspruch umfasst, wobei jeder Schuh (506) der oberen Lasche (210a) einer festen Innenstruktur (200) an einer Fläche des Triebwerkspylons (108) anliegt.

## Claims

1. Internal fixed structure (200) for a nacelle (106) of an aircraft (100) comprising an engine pylon (108), said internal fixed structure (200) comprising:
- an upper end panel (200a),
- a lower end panel (200b),
- an intermediate panel (200c) in the form of a half-cylinder and disposed between the upper end panel (200a) and the lower end panel (200b),
- an upper splice plate (210a) between the upper end panel (200a) and the intermediate panel (200c),
- a lower splice plate (210b) between the intermediate panel (200c) and the lower end panel (200b), wherein each splice plate (210a-b) is made up of a skin (312) with an inner face (312a) and an outer face (312b), wherein the inner face (312a) is fastened to the intermediate panel (200c) and to the end panel (200a-b) considered, and wherein the skin (312) comprises at least one indentation (314) protruding with respect to the outer face (312b), wherein each indentation (314) has a fastening surface (316), and
- for each fastening surface (316), a pad (506) fastened to said fastening surface (316), wherein each pad (506) of the upper splice plate (210a) is intended to bear against a surface of the engine pylon (108), and wherein each pad (506) of the lower splice plate (210b) is intended to bear against a pad (506) of a lower splice plate (210b) of another internal fixed structure (200).

2. Internal fixed structure (200) according to Claim 1, **characterized in that** each panel (200a-c) is a sandwich panel successively comprising a resistive skin (500a), a honeycomb structure (500b) and a structural skin (500c), which are fastened to one another, wherein the inner face (312a) of each splice plate (210a-b) is fastened to the structural skins (500c) of the intermediate panel (200c) and of the end panel (200a-b) considered.

3. Internal fixed structure (200) according to Claim 1, **characterized in that** each panel (200a-c) is a sandwich panel successively comprising a resistive skin (500a), a honeycomb structure (500b), a structural skin (500c), which are fastened to one another, and a closure skin (502) shaped so as to be fastened to the structural skin (500c) and to the edge of said panel (200a-c), wherein the inner face (312a) of each splice plate (210a-b) is fastened to the closure skins (502) of the intermediate panel (200c) and of the end panel (200a-b) considered.

4. Internal fixed structure (200) according to Claim 3, **characterized in that** it comprises a complementary skin (501) fastened between the resistive skins (500a) of the intermediate panel (200c) and of the end panel (200a-b) considered, and **in that** the closure skins (502) of the intermediate panel (200c) and of the end panel (200a-b) considered are common and thus form a single skin placed against the complementary skin (501).

5. Internal fixed structure (200) according to Claim 4, **characterized in that** it comprises a complementary honeycomb structure (503) fastened between the complementary skin (501) and the closure skin/skins (502).

6. Internal fixed structure (200) according to one of Claims 1 to 5, **characterized in that** the edge of the intermediate panel (200c) and the edge of an end panel (200a-b) considered are at a distance from one another, **in that** the splice plate (210a-b) considered comprises stiffeners (318) or extruded elements or corrugations disposed against the inner face (312a) of the skin (312) of said splice plate (210a-b), and **in that** each stiffener (318) or extruded element or corrugation is positioned between the edge of the intermediate panel (200c) and the edge of said end panel (200a-b).

7. Internal fixed structure (200) according to Claim 6, **characterized in that** each stiffener (318) or extruded element or corrugation comprises a plate (318a) fastened to the skin (312) of the splice plate (210a-b).

8. Internal fixed structure (200) according to Claim 7, **characterized in that** each stiffener (318) or extruded element or corrugation comprises a wall (318b) that is rigidly connected to the plate (318a) and extends perpendicularly with respect to the plate (318a).

9. Nacelle (106) for an aircraft (100) comprising an engine pylon (108), the nacelle (106) comprising two internal fixed structures (200) according to one of Claims 1 to 8, wherein the two internal fixed structures (200) face one another, in such a way that the intermediate panels (200c) form a cylinder, wherein each pad (506) of the lower splice plate (210b) of one internal fixed structure (200) bears against a pad (506) of the lower splice plate (210b) of the other internal fixed structure (200).

10. Aircraft (100) comprising an engine pylon (108) and at least one nacelle (106) according to the preceding claim, wherein each pad (506) of the upper splice plate (210a) of an internal fixed structure (200) bears against a surface of the engine pylon (108).
